# EUROPEAN PATENT SPECIFICATION

(11) **EP 2 064 393 B1**
(45) Date of publication and mention of the grant of the patent: **04.07.2012**
(21) Application number: 07853595.2
(22) Date of filing: 21.09.2007
(51) Int. Cl.: E02D 27/42

(54) **PARTIALLY PREFABRICATED MODULAR FOUNDATION SYSTEM**
TEILWEISE VORGEFERTIGTES MODULARES FUNDAMENTSYSTEM
SYSTÈME DE FONDATION MODULAIRE PARTIELLEMENT PRÉFABRIQUÉ

(30) Priority: 21.09.2006 US 826452 P; 07.08.2007 US 954502 P
(43) Date of publication of application: 03.06.2009
(73) Proprietor: Ahmed Phuly Engineering & Consulting, Inc., Andover, MN 55304 (US)
(72) Inventor: Phuly, Ahmed, Andover, MN 55304 (US)
(74) Representative: Hartz, Nikolai
(86) International application number: PCT/US2007/079213
(87) International publication number: WO 2008/036934

(56) References cited:
- WO-A1-01/11150
- WO-A1-01/40585
- WO-A1-2005/012651
- WO-A1-2005/012651
- WO-A2-2004/101898
- US-A- 4 707 964
- US-A- 5 785 459
- US-A- 5 878 540
- US-A1- 2004 093 824
- US-B1- 6 351 250
- US-B2- 6 594 968
- US-B2- 6 702 522

## Description

### BACKGROUND OF THE INVENTION

### 1. Field of the invention

This invention relates to a method for building partially prefabricated foundations for supporting wind turbines towers. A related method is disclosed in WO 2005/012651 A1.

### 2. Description of the Related Art

Conventional gravity style foundations for large wind turbine usually comprise a large, thick, horizontal, heavily reinforced cast in situ concrete base; and a vertical cast in situ cylindrical pedestal that is installed over the base. There are several problems that are typically encountered during the construction of such foundations.

The main problem is the monumental task of managing large continuous concrete pours, which require sophisticated planning and coordination in order to pour more than four hundred yards of concrete in one continuous pour, without having any cold joints in.

Another problem is logistics coordinating with multiple local batch plants the delivery plan of the large number of concrete trucks to the job site in a timely, organized manner.

A further problem is the complexity of installing the rebar assembly into the foundation which requires assembling two layers of steel reinforcing meshes that are two to six feet apart across the full area of the foundation, while maintaining strict geometric layout and specific spacing. This rebar assembly is made of extremely long and heavy rebar which requires the use of a crane in addition to multiple workers to install all components of the assembly. The rebar often exceeds forty feet in length, thus requiring special oversized shipment which is very expensive and usually requires special permits. That labor intensive and time consuming task requires large number of well trained rebar placing workers.

Another important problem is the fact that majority of the construction process consist of field work which could be easily compromised by weather and other site conditions.

A final problem is the thermal cracking of concrete due to overheating of the concrete mass. When concrete is cast in massive sections for wind tower foundations, temperature can reach high levels and the risk of thermal cracking becomes very likely. Thermal cracking often compromises the structural integrity of the foundations.

### BREIF SUMMARY OF THE INVENTION

It is desired to have a modular prefabricated foundation system such that each individual tower site can have a foundation built to standardized sizes for different wind turbine models, tower heights and geotechnical conditions. The wind turbine foundations can then be built to the standards of the Modular Prefabricated Foundation System which uses precast concrete rib stiffeners, with a cast in place slab on grade element and a central pedestal to build an integral foundation that will behave structurally as a monolithic foundation structure. Other precast components can be included such as perimeter beams, diaphragms, or intermediate stiffeners and slab sections. Some preassembled structural components such as pedestal cage with bolt assembly and slab reinforcing meshes can be used as components of the prefabricated foundation system.

Although the application is written for a wind turbine tower as the column being supported by the foundation, any tower or column can be used on the foundation including but not limited to, antennas, chimneys, stacks, distillation columns, water towers, electric power lines, bridges, buildings, or any other structure using a column.

A wind turbine foundation having a plurality of components, namely a central vertical pedestal, a substantially horizontal bottom support slab, and a plurality of radial reinforcing ribs extending radially outwardly from the pedestal. The ribs are prefabricated and transported to job site, but the pedestal and support slab are poured in situ at the site out of concrete. The prefabricated ribs are equipped with load transfer mechanisms, for shear force and bending moment, along the conjunctions with the cast in situ support slab. The prefabricated ribs are also equipped at their inner ends with load transfer mechanisms, for shear force and bending moment, along the conjunctions with the cast in situ pedestal. The ribs are arranged in a circumferentially spaced manner around the outer diameter of the pedestal cage assembly and slab reinforcing steel is installed. Forms are then arranged for the pedestal and support slab. The support slab is cast in situ by pouring concrete into the forms and then pedestal concrete is poured over the slab into the pedestal form. When the concrete cures the support slab is united to the prefabricated ribs and the ribs are also united to the pedestal. The final result is continuous monolithic polygon or circular shape foundation wherein loads are carried across the structure vertically and laterally through the continuous structure by the doweled and spliced reinforcing steel bars which are integrally cast into the pedestal, ribs and support slab. The combination of the high stiffness of the ribs, solid pedestal and continuous slab construction across the pedestal, and through or under ribs, allows the slab to behave structurally as a continuous slab over multiple rigid supports resulting in small bending and shear stresses in the slab, reducing deflections and increasing the stiffness of the foundation, improving fatigue conditions as well as allowing for the benefits of an economical design. Support slab reinforcing steel covers the entire footprint of the foundation and extends across the slab area under the pedestal to improve the structural performance of the foundation under different loading conditions.

The foundation of the present invention substantially reduces the amount of concrete used in wind turbine foundation of spread footing style, simplifies the placement of rebar and concrete in the foundation, allows for labor and time savings and shortens foundation construction schedule when compared to conventional designs.

This invention provides the wind energy industry with a foundation system suitable for large wind turbines including 2.5 MW, 3 MW and possibly larger, wherein the amount of cast in situ concrete work is limited, and the number of concrete trucks required for the foundation is small and manageable level.

The present invention relies on using prefabricated components that meet size and weight limits for standard ground freight shipping through typical roads and highways, without resorting to special permitting for oversize or overweight shipments, keeping in mind that the foundation width for large turbines can easily exceed sixty feet.

The present invention uses specific combinations of precast components with cast in situ components designed to speedup construction without compromising the rigidity and structural continuity and optimization of the foundation. The combination of high strength, high stiffness prefabricated ribs, solid pedestal construction and continuous slab construction across the pedestal, and through or under ribs, allows the slab to behave structurally as a continuous slab over multiple rigid supports resulting in small bending and shear stresses in the slab, reducing deflections and increasing the stiffness of the foundation, substantially reducing fatigue as well as allowing for the benefits of rapid construction and economical design.

The present invention improves the geometry of the foundation in order to enhance dissipation conditions for the heat of hydration due to the typical temperature rise after casting. This design feature is achieved by reducing the thickness of the support slab and the ratio of concrete mass to surface area, thus reducing the risk of thermal cracking and protecting the structural integrity of the foundations.

The present invention optimizes the design support slab by configuring slab reinforcing to span between supporting ribs and allowing it to continue under or across the ribs. As a result the required slab thickness is optimized and the amount of cast in situ concrete is reduced.

The present invention reduces the maximum rebar length for field installation to roughly 7.6 meters (twenty five feet), which is significantly shorter when compared to conventional footing that may requires 15.2 to 18.3 meters (fifty to sixty foot) long reinforcing bars.

The present invention allows rib dowels, or post tensioning strands, extending inwardly into the pedestal at one end, to be coupled with and connected to corresponding dowels, or strands, on the opposite end of the pedestal. As a result each pair of ribs on opposite ends of the pedestal will behave structurally as one continuous beam across the width of the foundation.

The present invention reduces fatigue for concrete and rebar in the foundation by minimizing stress concentrations through appropriately configured connections and component geometry. The solid and deep construction of the pedestal allows for great reduction of stresses across the pedestal and at the conjunctions between the pedestal and surrounding. Dowels into the pedestal are relatively deep and can be paired with corresponding dowels extending from the opposite end of the foundation. The solid pedestal offers generous bearing conditions for the tower base plate and improves geometry as needed to minimize fatigue.

The present invention employs prestressing and/or post tensioning techniques in order to maximize the performance of the foundation, or to extend its life span. Besides the tensioning of anchor bolts, tensioning of strands along the length concrete ribs and across the pedestal and circumferential 112 and radial 111 post tensioning strands imbedded in the foundation can be employed. A series of diagonal tensioning strand extending across adjacent ribs can be used.

The present invention ensures good contact between foundation and soil, or sub-base, by casting the slab against prepared soil, or crushed stone sub-base, or a mud slab. Known grouting and leveling techniques under ribs can be employed for ensuring plumb installation and good soil contact.

The present invention uses a tower base leveling and grouting without using tower anchor bolts for leveling, or having to use leveling shims which cause undesirable stress concentration at shim locations which could lead to localized fatigue failure at shim locations. This task is achieved by providing the bolt template at the very top of the bolt assembly with at least three sets of additional bolts and corresponding threaded bolt inserts suitable for embedment into concrete. Such leveling bolts and inserts will be located outside or inside the bolt circle of tower base, but directly under tower base flange. This allows for continuity of grout bed construction and provides an easy access for leveling bolts. Small cutouts at leveling bolt locations connected can be used. Another benefit of this leveling technique is having the ability to tension all anchor bolts in one work session.

The present invention improves safety and accessibility around foundations during construction, and reduces hazardous conditions for construction crew. That goal is achieved by using reusable pedestal form sections that connect to ribs to form and are fitted with platform sections for forming a continuous access platform around the pedestal, and connect to at least one access ramp extending beyond the edge of the foundation. The platform and the ramp are equipped with slip-resistant walking surface and elevated ramps all provided with guardrails and designed to applicable industry safety standards. The relatively thin slab thickness minimizes the risk of worker injury during bar assembly and concrete finishing. The ramps can also be structurally supported and stabilized by the ribs.

The present invention reduces the number of concrete trucks required per footing by roughly half. It also reduces construction crew size and man-hours per footing while eliminating concerns about managing large continuous pours and oversized trucking service.

The invention can be reconfigured for supporting lattice towers comprising multiple columns and can also be adapted for offshore foundations.

### OBJECTS OF THE INVENTION

An object of this invention is to provide the wind energy industry with a fast, reliable, yet cost effective foundation system that is suitable for most wind energy projects, including projects using the largest commercially available turbines and tallest towers, while providing a foundation lifespan that is longer than conventional foundation systems.

Another object of this invention is to reduce the cost of wind energy projects by realizing savings in the areas of rebar assembly, form work, concrete trucking service, concrete pouring and finishing, logistics, man-hours and crane operations.

It is the object of this invention is to provide foundation system suitable for large wind turbines including 2.5 MW, 3 MW or larger, wherein the amount of cast in situ concrete work is limited and the number of concrete trucks, required for the foundation is reduced to a manageable level when compared to conventional gravity style foundations.

Another object of this invention is to improve dissipation conditions for the heat of hydration and the typical temperature rise after casting. That goal is achieved by reducing the ratio of concrete mass to surface area. When concrete is cast in massive sections for wind tower foundations, temperature can reach 160 degree F and the risk of thermal cracking becomes very high unless cooling techniques are applied. Thermal cracking often compromises the structural integrity of the foundations.

A further object of this invention is to improve foundation structural properties due to fabrication of some structural components in a fully controlled environment of a precast concrete plant.

Still another object of this invention is to utilize desirable features and benefits associated with mass production of precast concrete such as high reliability and uniform consistency and high compressive strength.

Another important object of this invention is to minimize chances for errors in bar placement, spacing and layout by providing pre-marked spacing for splicing slab rebar with existing dowels extending from ribs.

A further object ofthis invention is to use light weight, small, short and easy to handle rebar for the cast in situ concrete.

A further important object of this invention is to provide the wind energy industry with a solution for all weather construction.

Still another important object of this invention is to improve safety and accessibility around foundations under construction, and reduce hazardous conditions for construction crew.

A further significant object of this invention is to increase productivity and increase the number of footing that can be built in a given time frame using the same number of workers, when compared to conventional foundation designs built under similar conditions.

Another object of this invention is to employ prestressing and/or post tensioning techniques in order to maximize the performance of the foundation, or to extend its life span.

Another object ofthis invention is to provide the wind energy industry with reliable and readily available designs, and prefabricated components, for every wind energy project wherein foundation designs are pre-approved by and coordinated with turbine manufacture.

A further object of this invention is to use standard designs to reduce engineering work and simplify the permitting process, as well as improve project construction schedule.

Still another object of this invention is to utilize standard pre-approved designs resulting in significant reduction in engineering fees and third party approval fees.

It is also the object of this invention is to provide wind turbine vendors with the ability to select pre-approved complete foundation designs for wind turbine foundation based on project and site variables including turbine model and tower height; site geotechnical characteristics; and desired foundation style such as gravity or piling.

Another object of this invention is to provide foundation contractors with the convenience and economy of using commercially available prefabricated components with complete assembly and detail drawings that can be delivered to any project site with short lead time.

A further object of this invention is to improve the quality and productivity of foundation construction due to experience gained from practicing standard construction techniques.

Still another object of his invention is to provide structural engineers with selection guides for wind tower foundations adopted by wind turbine manufacturers and approved by industry organizations such as Precast Concrete Institute and American Wind Energy Association.

The final object of this invention is to use the modular foundation system for other tower structures such as chimneys, stacks, distillation columns and telecommunication towers.

Other objects, advantages and novel features of the present invention will become apparent from the following description of the preferred embodiments when considered in conjunction with the accompanying drawings.

### BRIEF DESCRIPTION OF THE DRAWINGS

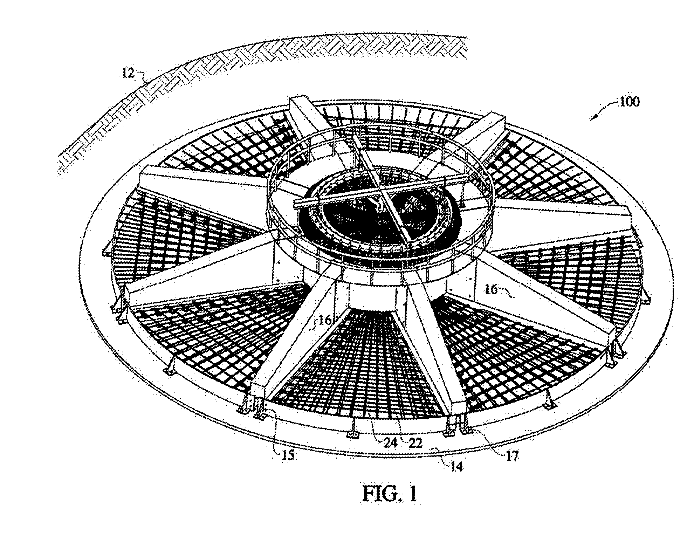

Figure 1 is a perspective view of the foundation showing the rebar before pouring the concrete.
Figure 2A is a perspective view of a pedestal and ribs in a second embodiment with a pier for off shore applications.
Figure 2B is a perspective view of a pedestal and ribs.
Figure 3A is an inner perspective view of a rib showing connections to the pedestal and the slab.
Figure 3B is an outer perspective view of a rib showing connections to the pedestal and the slab.

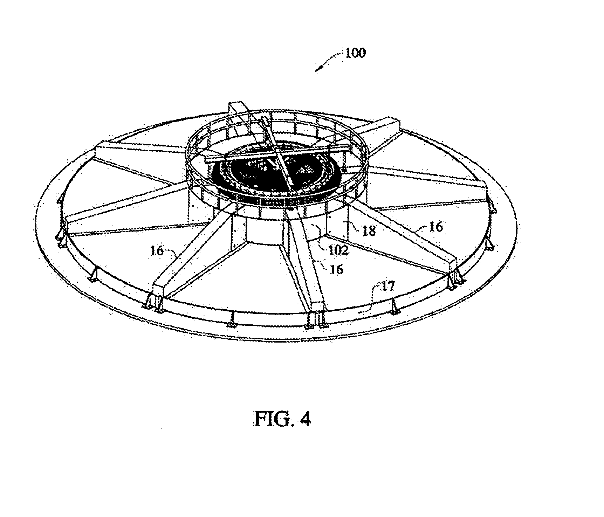

Figure 4 is a perspective view of a rib and forms for forming the pedestal and slab.

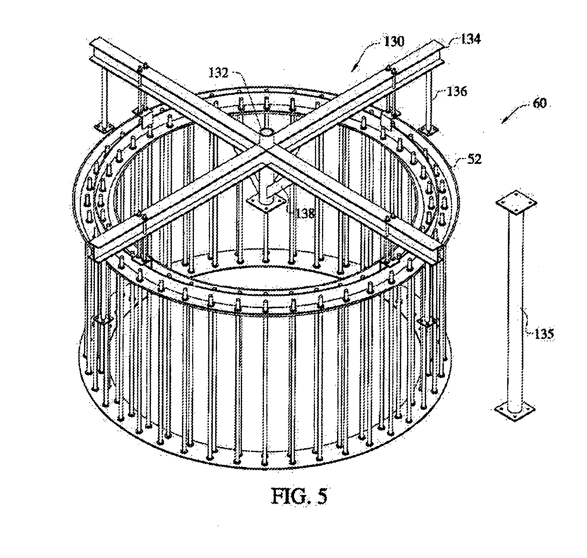

Figure 5 is a perspective view of the bolt assembly and alignment apparatus.

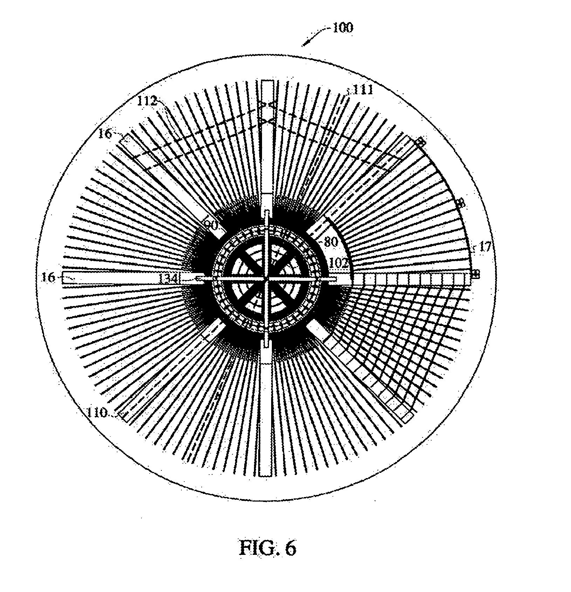

Figure 6 is a top view of the foundation prior to pouring the concrete showing the rebar and template for the anchor bolts and post tensioning elements.

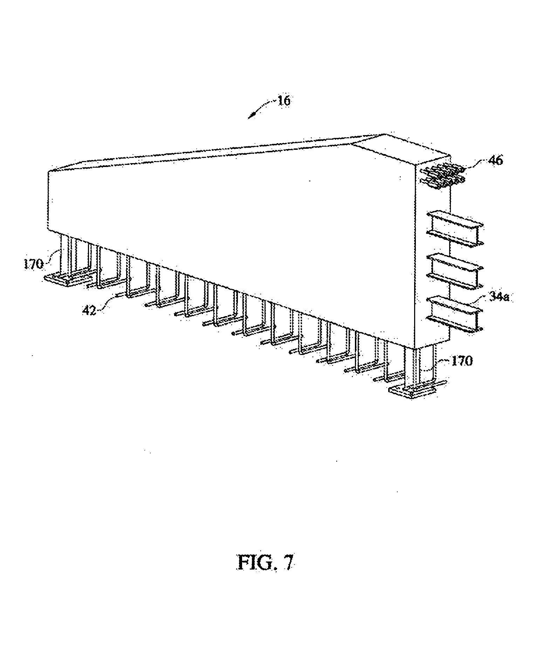

Figure 7 is a perspective view of a raised rib having means for raising the rib above the slab.

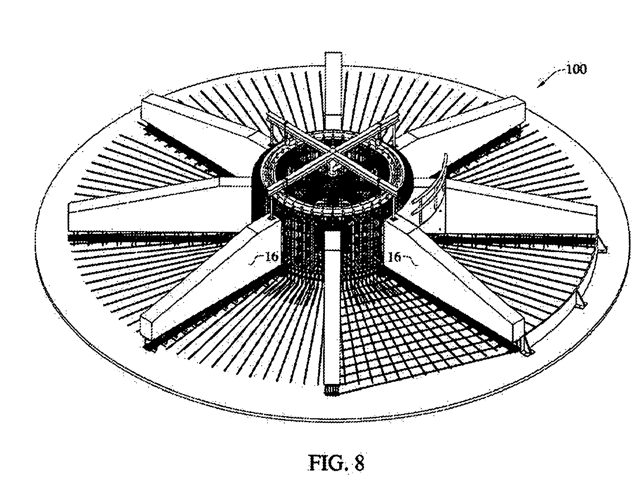

Figure 8 is a perspective view of the foundation showing the alignment apparatus and a pedestal forming section.

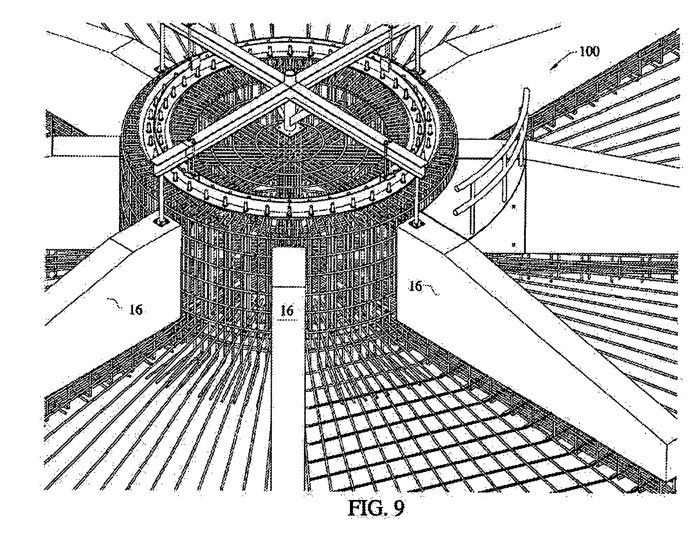

Figure 9 is a perspective view of the foundation showing the rebar and rebar cage.

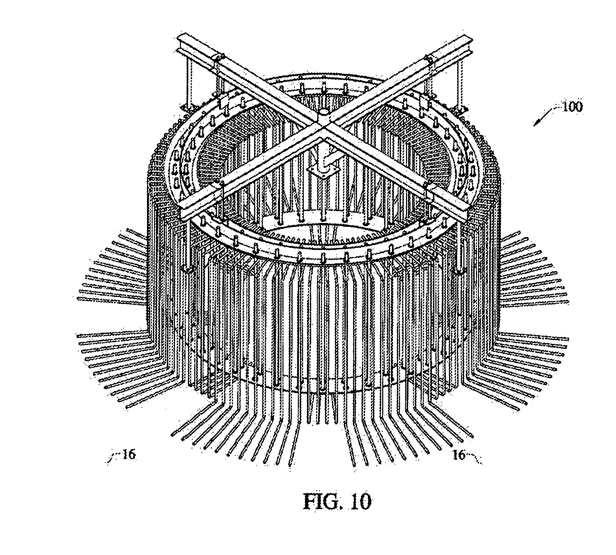

Figure 10 is a perspective view pedestal cage assembly with anchor bolt and reinforcing.

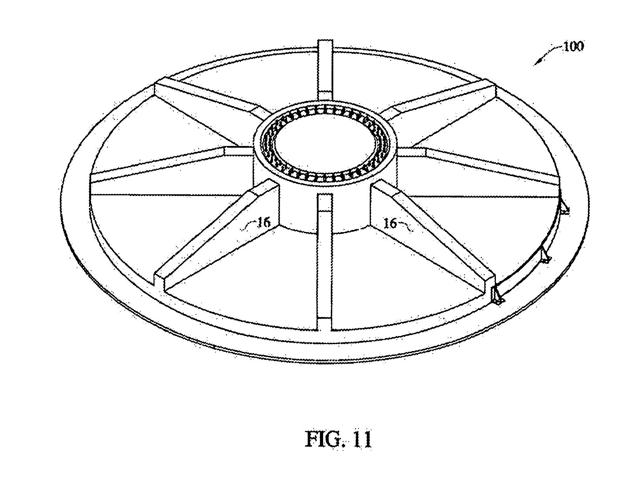

Figure 11 is a perspective view of the foundation.

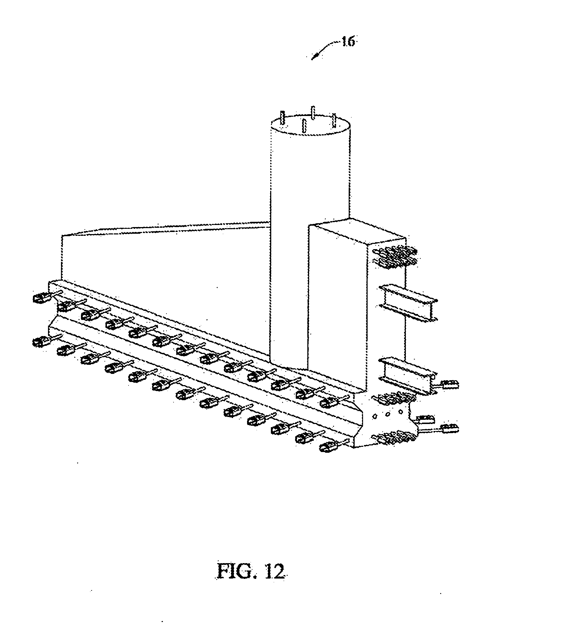

Figure 12 is a perspective view of the rib for supporting a lattice style tower.

### DETAILED DESCRIPTION OF THE PREFERRED EMBODIMENTS

The present invention pertains to a wind turbine foundation for wind turbines. The foundation comprises a plurality of components, namely a central vertical pedestal, a substantially horizontal bottom support slab, and a plurality of radial reinforcing ribs extending radially outwardly from the pedestal. The ribs are prefabricated and transported to job site, but the pedestal and support slab are poured in situ at the site out of concrete.

A construction site is prepared by excavation and flattening and preparation of soil for the foundation 10. The foundation 10 may be set on pilings, on piers, or have anchors in a conventional manner.

The foundation 10 may be set on a mud slab 14 or on compacted granular fill. The mud slab is often a thin plain concrete layer intended to provide a clean and level base for foundation installation. After the foundation site has been prepared, a plurality of three or more precast stiffener ribs 16 are placed on the mud slab 14 or compacted granular fill inside of the excavation pit 12. The precast concrete stiffener ribs 16 may have means for leveling or other leveling techniques can be employed for level and plumb installation. If desired, grouting techniques can be used to ensure complete rib base contact with the mud slab or sub-base. The precast concrete stiffener ribs 16 have bases 21 with left shear key 38 and/or shear connectors and right shear key 36 and/or shear connectors. The precast concrete stiffener ribs 16 also have a vertical shear key 34. The shear keys 34, 36 and 38 and associated dowels 40, 42 and 46 are to ensure continuous connections, with complete transfer of shear and bending loads, between the precast concrete rib stiffener 16 and the cast in place concrete which is to be poured into the foundation 10. The precast concrete stiffener ribs 16 have upper dowels 40 and lower dowels 42 extending on the right and left sides of the base 21 which interconnect with and spliced to upper mesh rebar 22 and lower mesh rebar 24 installed between the ribs 16 and connected to dowels 40, 42 to form reinforcement for the slabs of foundation 10 when the concrete is poured. The base 21 of rib 16 and the top of rib 16 also have dowels 46 radially entering the pedestal 100 in the center of the foundation.

Doweling of rebar between ribs and foundation components can be achieved by using rebar couplers, bar extenders or any mechanical rebar splicing system. Shear keys can be replaced with, or combined with, corbels or shear studs, or other shear connectors such as angled rebar or embedded steel shapes.

In another embodiment an array of steel beams, encased into the web of the rib and extend inwardly into the pedestal cavity at the inner most end of ribs, shall serve as suitable shear force transfer mechanism between rib and pedestal and will also serve as shear reinforcing against pullout shear force of the embedment ring as it crosses the pullout cone of the embedment ring.

In another embodiment the embedment ring, arranged at bottom of bolt assembly, is connected or welded to beams, encased into the web of the array of rib and extend inwardly into the pedestal cavity at the inner most ends of ribs. This configuration will improve the resistance for pullout of the embedment ring by relying on engaging the shear load capacity of the deep ribs.

In one embodiment the ribs are treated with concrete bonding agent along the sides where cast in place concrete is received.

In another embodiment the ribs are provided with water stops or other sealers along the sides where cast in place concrete is received, if corrosion of rebar is a concern.

In another embodiment the ribs or other foundation elements are covered or coated with protective material for extending the life span of the footing.

In one embodiment the ribs 16 are placed on the mud slab 14 first and then the pedestal cage 50 made of an array of rebar preferably z shaped rebar and circumferential rebar is assembled. Alternatively the pedestal cage 50 is assembled first or a preassembled pedestal cage 50 dropped into place first and then the ribs 16 with dowels 46 are slid into place so that dowels 46 and shear connectors fit between the pedestal cage 50 rebar assembly.

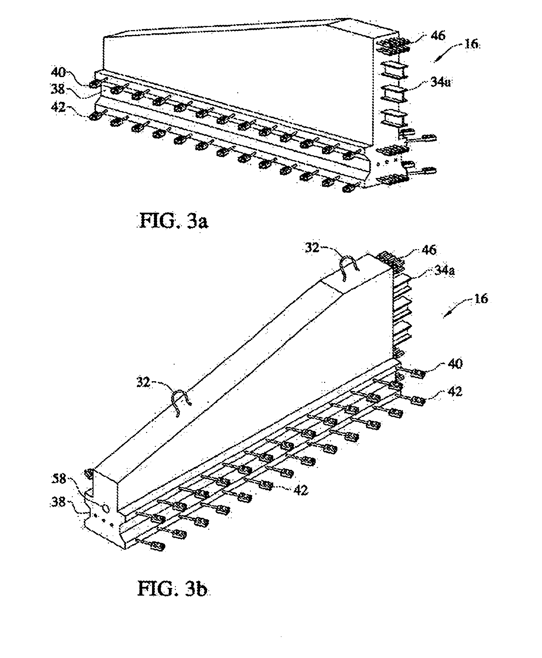

As best seen in Fig. 3, the precast concrete stiffener rib 16 has lifting lugs 32 to help place the stiffener rib 16 into the excavated construction area. The base 21 has a flat bottom surface such that the ribs may stand on their own on the mud slab 14 or compacted granular fill or during transportation from precast plant to foundation site. The precast concrete stiffener ribs 16 have prestressing elements 58 running through the ribs 16 radially from the outside of the ribs 16 and through pedestal 100. The prestressing elements 58 (or post tensioning elements) may be anchored to the opposite side of the pedestal or optionally run through the opposing precast concrete stiffener 16 on the other side of the pedestal 16 and anchored at the end of the opposite rib 16. Couplers can be used to connect prestressing strands extended though ribs and across the pedestal. Once the ribs 16 and the pedestal cage 50 are in place, the dowels 46 extending radially inward from ribs 16 may be connected to, or spliced with, corresponding dowels arranged in the pedestal cage. Inside of a cage 50 are additional rebars 48 which will facilitate the continuity of the structural components through the pedestal 100 as well as resist bearing, shear and pending loads.

Also inside of pedestal reinforcement cage 50 is a bolt assembly 60 comprising a bolt template 52 an embedment ring 54 and anchor bolts 56 protected by a PVC sleeve 57 or wrapped with a material to prevent bonding between the anchor bolts and concrete to be poured. The anchor bolts 56 have a top portion which is used to attach the base flange of a tower or column to the pedestal. A grout trough template at the bottom of the bolt template 52 may be used to create a grout trough to ensure a good connection of the tower or column to the pedestal 100. The grout trough 90 will be formed by removing the bolt template 52 from the anchor bolts 56 after the concrete has been poured. Radial dowels, prestressing elements or shear connectors at the inner end of ribs should be spaced to clear anchor bolts and other reinforcement arranged in pedestal cage.

In order to hold the bolt assembly 60 in place for proper alignment of the anchor bolts 56 an alignment apparatus 130 can be utilized. The alignment apparatus 130 can have a central post 132 with arms 134 attached perpendicularly to the center post and having legs 136 for attachment to the top of the ribs 16 to provide added stability, and bolt circle proper alignment during construction. The legs 136 being of adjustable height relative to the arms 134. The arms 134 may have braces 138 attached to the central post 132 for holding the arms straight. The central post 132 may also have rod supports 135 for holding reinforcement rebars such as reinforcement rebars 80 which are spliced to dowels 46. The alignment apparatus 130 also has adjustable support members 140 for attachment between the arms 134 and the bolt template 52 to align the anchor bolts 56 so they are upright. The alignment apparatus 130 can support the bolt assembly without central post by relying on the legs 136 supported by ribs, which allows the lower portion of the central post to be removed if desired. Alignment apparatus can be used as at template to ensure proper location, elevation and orientation of ribs.

The ribs 16 can be of any shape or size depending on the specifications of the tower and loads thereon. For example the ribs may be trapezoidal, rectangular, box, tee shaped or I beam shaped. The ribs may have intermediate stiffener plates or diaphragms for improved structural performance. The ribs 16 may have steps 120 or may receive ramps or catwalks thereon for easy access to the forms and pedestal used during construction and maintenance and means for supporting stairs, ramps, ladders and catwalks for use during construction or for maintenance.

Ribs 16 can have means for receiving and supporting forms 18, such as bolts or threaded inserts for receiving and supporting the pedestal forms 102. The ribs 16 may also have attachment means 15 for holding base forms 17. The pedestal forms may be equipped with platform sections for allowing access around the pedestal and the rest of the footing. The ribs may also have steel beams, trusses or girders encased in the concrete along the length of the ribs. The beams or girders can connect to a central steel drum or structure in the pedestal for forming a monolithic structure.

With all the rebar, ribs 16, pedestal 100, bolt assembly frame 80 and optional alignment apparatus 130 in place concrete forms may be attached such that concrete can be poured to form the pedestal and base of the foundation. The pedestal forms 102 may be attached to the ribs 16 by bolts 18 or by any other means. Similarly the base perimeter forms 17 may be attached to the ribs 16 by bolts 15 or by any other means. Alternatively the base perimeter forms may be supported to the ground or the mud slab.

With all the parts assembled all the rebar in place and the conduit for the prestressing cable or rods of the foundation in place, concrete is ready to be pored into the pedestal and between the ribs. The pouring of the concrete can be accomplished quickly and the area between the ribs can be finished as the pedestal concrete is still being poured. The concrete may all be added at the central portion of the pedestal or at the pedestal and the base simultaneously. Alternatively the base for the entire foot print of the footing can be poured in a first pour then the pedestal can be formed in a second pour.

When the concrete sets, the upper section of the alignment apparatus 130 and the bolt template 52 may be removed by unbolting the connection plate 150 from the top portion of the central post 160, and unbolting the legs 136 from ribs.

For higher load capacity post tensioning of the foundation is completed by tightening post tensioning cables 110. Circumferential and radial post-tensioning techniques in slab and pedestal can be used if desired.

After the concrete sets, the foundation can be covered with the backfill material to add weigh on top of the foundation base to stabilize the foundation against overturning.

Alternately the bolt assembly can be replaced by a drum with dowels or plates for embedding in concrete and the drum having means for receiving a tower base by means of joining bolts attached to the top of the drum.

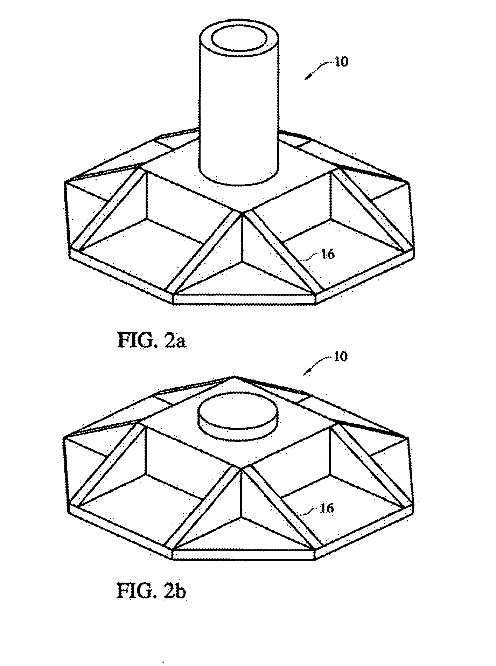

Pedestal 100 can be any size or shape, round, triangular, square, polygon or other shape depending on the specifications of the tower and loads thereon. The ribs can be in any pattern around the pedestal. An alternative design is shown in Fig. 2 having a square pedestal and ribs at the corners parallel to the faces of the pedestal.

Pre-assembled reinforcement sections (meshes) of the slab components can be lowered down in place to speedup construction. A combination of mechanical bar couplers and splicing techniques can be used provide continuity of reinforcing across the foundation.

Pre-assembled rib forms with all internal components including rebar, dowels and prestressing elements can be used in lieu of precast ribs in the same manner as the described above. Cast in place concrete will be poured into the rib forms as well as the pedestal and the slab. Forms for ribs and pedestal can be removed and reused.
Ribs can also be made in segments and eventually united by means doweling or using structural connectors

Forms for the pedestal and foundation perimeter can be made of precast concrete as separate components or as an integral part of the rib, and can be left as part of the structure.

Ribs can be made with arrangement, mechanisms and connecters for receiving piles or anchors in different configurations.

When the concrete cures the support slab is united to the prefabricated ribs and the ribs are also united to the pedestal. The final result is continuous monolithic foundation wherein loads are carried across the structure vertically and laterally through the continuous structure by the doweled and spliced reinforcing steel bars which are integrally cast into the pedestal, ribs and support slab. The combination of the high stiffness of the ribs, solid pedestal and continuous slab construction across the pedestal, and through ribs, allows the slab to behave structurally as a continuous slab over multiple rigid supports resulting in small flexural and shear stresses in the slab, reducing deflections, improving fatigue conditions and increasing the stiffness of the foundation as well as allowing for the benefits of an economical design.

The prefabricated ribs 16 can be molded at a facility under controlled conditions for good quality concrete setting and controlled rebar spacing which is superior to what can be obtained on a job site and at a lower cost. The ribs, acting as deep stiff girders and similar to counterforts, allow the base of the foundation slabs to have a relatively small thickness using less cast in place concrete and rebar thus saving cost for each foundation. The base rebar will be of smaller size than rebar used on a standard cast in place gravity-style spread footing.

Alternatively ribs 16 can have posts 170, or other means, arranged at the ribs 16 to hold the ribs 16 in place, maintain them plumb during construction and elevate them over sub-base at a predetermined. This style of ribs is intended to be raised above the ground or mud slab 14 so that foundation support slab can be poured in place continuously under ribs. Dowels and shear connectors for this style may be arranged at the bottom of the rib for connecting with base slab which extends under the raised rib. When the concrete cures the continuous support slab, extending under the ribs, is united to the prefabricated ribs and the ribs are also united to the pedestal. The final result is continuous monolithic foundation wherein loads are carried across the structure vertically and laterally through the continuous structure by the doweled and spliced reinforcing steel bars which are integrally cast into the pedestal, ribs and support slab. The combination of the high stiffness of the ribs, solid pedestal and continuous slab construction across the pedestal, and under ribs, allows the slab to behave structurally as a continuous slab over multiple rigid supports resulting in small flexural and shear stresses in the slab, reducing deflections, improving fatigue conditions and increasing the stiffness of the foundation as well as allowing for the benefits of an economical design.

Cast in situ concrete can be shielded from extreme weather, including heat, cold, rain and snow, by simply extending blankets, covers or shields between ribs, and then using heaters or fans as required to regulate temperature, humidity of concrete to allow for proper curing.

Therefore, for wind turbine construction as an example, a known turbine model and tower the base loads and tower base configuration can be matched with site characteristics and geotechnical conditions to select a standard foundation design requirement to build standardized foundations so that engineering time and expense for building wind turbine foundations can be reduced significantly.

Another embodiment of the present invention pertains to a leveling technique that simplifies tower base leveling process and shortens the number of steps required for grouting under tower base. The bolt template is provided at the very top of the bolt assembly with at least three sets of additional bolts and corresponding threaded bolt inserts suitable for embedment into concrete. Such leveling bolts and inserts will be located outside or inside the bolt circle of tower base, but directly under tower base flange. This allows for continuity of grout bed construction and provides an easy access for leveling bolts. Small cutouts at leveling bolt locations connected can be used. Another benefit of this leveling technique is having the ability to tension all anchor bolts in one work session.

The foundation design can be reconfigured to support lattice towers comprising multiple columns with base plate connected to foundations at a spaced array. The ribs will be provided column base plate receiving components including embedded anchor bolts and an integrated pier design into the rib. The rib geometry will be widened and enlarged at the integral pier. The array of integrated piers arranged into ribs shall receive the array of columns of the lattice tower. The integrated piers can extend above final grade elevation, while the top of pedestal can stay below final grade elevation. For this foundation style, no bolt assembly or tower receiving components will be required in the depressed pedestal.

This foundation design can also be adapted for offshore wind turbine projects. In this case the foundation may be assembled on a floating platform or dry dock then transported or floated to its destination, then lowered into a prepared seabed location. The foundation can be weighed down in place by filling over it with suitable material.

Obviously, many modifications and variations of the present invention are possible in light of the above teachings. It is therefore to be understood that, within the scope of the appended claims the invention may be practiced otherwise than as specifically described.

## Claims

1. A foundation for a tower structure having a central pedestal of the rib on a slab type, the foundation comprising:
a prefabricated or cast-in-situ rib (16) with a horizontal base having two sides and having a means (36, 38, 40,42) along the length of the two sides of the horizontal base (21), or a means (42b), under the base (21) for connecting to and being structurally fixed to a cast-in-situ slab (20), wherein such means ensure structural continuity of the slab (20) across or under the rib (16), and the rib (16) has a proximal vertical end having a means thereon (34, 34a, 46) for connecting to and being structurally fixed to a cast-in-situ pedestal (10) wherein such means ensure structural continuity of the pedestal (10) to the rib (16), and post tensioning elements (58) running through the ribs (16) and the pedestal (10) for connecting the ribs (16) to the pedestal (10) under post compression stress.

2. A foundation for a tower structure as in claim 1 having:
a structurally continuous cast-in-situ concrete slab (20) with a perimeter post tensioning element (112), and a plurality of horizontal post tensioning elements (111) in the slab (20) for forming a horizontally prestressed concrete slab (20), and having at least two layers of horizontal rebar grid (22, 24) therein,
a cast-in-situ concrete pedestal (10) with an embedded pedestal cage (50) having a plurality of anchor bolts (56) extending vertically from an embedment ring (54) near the bottom of the pedestal (10) through the top of the pedestal (10) for securing the base of a tower and providing post compression stress on the pedestal, and having vertical rebar or Z-shaped rebar (55) and circumferential rebar (59) therein for reinforcing the pedestal,
wherein the cast-in-situ concrete pedestal (10) and the cast-in-situ concrete slab (20) are integrally connected with each other, and
a plurality of ribs (16) extending outwardly from the pedestal (10), above the slab (20).

3. A foundation for a tower structure as in claim 2 having a plurality of horizontal post tensioning elements (110) traversing the length of the ribs (16) either through the base of the ribs or beneath the ribs (16) for horizontally prestressing the foundation.

4. A foundation for a tower structure as in claim 2 or claim 3 having the ribs (16) arranged in pairs on opposite sides of the pedestal (10), and having post tensioning elements (58, 110) extending from the distal ends of the ribs (16) through the pedestal (10) to link pairs of ribs (16) to the pedestal (10) under multi-axial post compression stress.

5. A foundation for a tower structure as in any one of claims 1 to 4 wherein ribs (16) have a pier (16p) for supporting a tower.

6. A foundation for a tower structure as in any one of claims 2, 3 or 4 wherein the pedestal (10) has a solid concrete core at least as high as the ribs (16).

7. A foundation for a tower structure as in any one of claims 2, 3 or 4 wherein the slab (20) has perimeter beams (190).

8. A foundation for a tower structure as in claim 7 wherein the perimeter beams are prefabricated.

9. A foundation for a tower structure as in claim 2 wherein splices are used to connect the slab reinforcing rebar (22, 24) to horizontal dowels (40, 42) on the ribs (16), or the rebar (22, 24) extends continuously beneath the ribs (16), for structural continuity of the slab (20).

10. A foundation for a tower structure as in any one of claims 2, 3 or 4 wherein the cast-in-situ pedestal (10) and cast-in-situ slab (20) have rebar integrally connecting them together for structural integrity.

11. A method for constructing a foundation for a tower structure having a central pedestal of the rib on a slab type, the method comprising:
providing a plurality of ribs (16) with post tensioning elements or conduits for post tensioning elements therein or rib forms (16f) with assembled reinforcing and post tensioning element conduits therein for post tensioning elements (58, 110) at the site where the foundation is to be constructed, and arranging such ribs (16) or rib forms (16b) with the inner ends of the ribs being adjacent a location where a pedestal (10) is to be formed,
providing a pedestal form (102) and a pedestal reinforcing cage (60) with an anchor bolt assembly (50) within the pedestal form,
providing post tensioning elements (58, 110, 111), or conduits for post tensioning elements at desired positions within where the pedestal (10) is to be formed,
providing slab forms (17) for a slab perimeter and providing reinforcing elements (22, 24) inside the slab forms,
providing horizontal (111) and perimeter (112) post tensioning elements or conduits for post tensioning elements within the slab forms,
pouring concrete at the site into said forms to integrally join the ribs (16) both to the slab (20) and the pedestal (10) after the poured concrete sets,
prestressing the foundation along the ribs and across the pedestal, and horizontally across the slab and along the perimeter with post tensioning elements (58, 110, 111, 112),
attaching a tower base atop the foundation and prestressing the foundation vertically using the bolt assembly (60).

12. A method for constructing a foundation as in claim 11 further providing an excavation pit (13) for constructing the foundation 100 in, and backfilling the foundation with backfill material.

13. A method for constructing a foundation as in claim 11 including the step of constructing the foundation on a barge or in a dry dock, transporting or floating the foundation to an installation site, lowering the foundation into a prepared seabed location and back-filling the foundation with backfilling material for added stability.

14. A method for constructing a foundation as in claim 11 with the additional step of connecting the ribs (16) or slab (20) to piles, piers or anchors extending into the ground under the foundation to stabilize the foundation.

15. A method for constructing a foundation as in claim 11 with the additional step of providing a perimeter beam integral with the foundation.

## Patentansprüche

1. Fundament für eine Turmstruktur mit einem zentralen Sockel einer Rippe auf einer Plattenart, wobei das Fundament folgendes umfasst:
eine vorgefertigte oder vor Ort betonierte Rippe (16) mit einer horizontalen Basis, die zwei Seiten und zwei Mitteln (36, 38, 40, 42) entlang der Länge der zwei Seiten der horizontalen Basis (21) aufweist oder ein Mittel (42b) unter der Basis (21), um mit einer vor Ort betonierten Platte (20) verbunden und strukturell befestigt zu werden, wobei diese Mittel die strukturelle Kontinuität der Platte (20) durch die oder unter der Rippe (16) sicherstellen, und die Rippe (16) ein proximales vertikales Ende mit einem Mittel darauf (34, 34a, 46) aufweist, um mit dem vor Ort betonierten Sockel (10) verbunden und strukturell befestigt zu werden, wobei dieses Mittel die strukturelle Kontinuität des Sockels (10) zu der Rippe (16) sicherstellt, und
Vorspannelemente (58) durch die Rippen (16) und den Sockel (10) verlaufen, um die Rippen (16) mit dem Sockel (10) unter Vordruckspannung zu verbinden.

2. Fundament für eine Turmstruktur gemäß Anspruch 1, das folgendes aufweist:
eine strukturell durchgehende vor Ort betonierte Betonplatte (20) mit einem Umfangs-Vorspannelement (112) und einer Vielzahl von horizontalen Vorspannelementen (111) in der Platte (20), um eine horizontal vorgespannte Betonplatte (20) auszubilden, die wenigstens zwei Schichten horizontaler Gitter aus Bewehrungsstäben (22, 24) darin aufweist,
einen vor Ort betonierten Betonsockel (10) mit einem eingebetteten Sockelkorb (50) mit einer Vielzahl von Ankerbolzen (56), die sich vertikal von einem Verankerungsring (54) in der Nähe der Unterseite des Sockels (10) durch die Oberseite des Sockels (10) erstrecken, um die Basis eines Turms zu sichern und auf dem Sockel eine Vordruckspannung bereitzustellen, und
der vertikale Bewehrungsstäbe oder Z-förmige Bewehrungsstäbe (55) und umlaufenden Bewehrungsstäbe (59) darin aufweist, um den Sockel zu verstärken,
wobei der vor Ort betonierte Betonsockel (10) und die vor Ort betonierte Betonplatte (20) integral miteinander verbunden sind, und
eine Vielzahl von Rippen (16), die sich von dem Sockel (10) nach Außen über die Platte (20) erstrecken.

3. Fundament für eine Turmstruktur gemäß Anspruch 2, das eine Vielzahl von horizontalen Vorspannelementen (110) aufweist, die die Länge der Rippen (16) entweder durch die Basis der Rippen (16) oder unterhalb der Rippen (16) durchlaufen, um das Fundament horizontal vorzuspannen.

4. Fundament für eine Turmstruktur gemäß Anspruch 2 oder Anspruch 3, wobei die Rippen (16) in Paaren auf gegenüberliegenden Seiten des Sockels (10) angeordnet sind und sich die Vorspannelemente (58, 110) von den distalen Enden der Rippen (16) durch den Sockel (10) erstrecken, um die Paare der Rippen (16) mit dem Sockel (10) unter multiaxialer Vordruckspannung zu verbinden.

5. Fundament für eine Turmstruktur gemäß einem der Ansprüche 1 bis 4, wobei die Rippen (16) einen Pfeiler (16p) aufweisen, um den Turm zu stützen.

6. Fundament für eine Turmstruktur gemäß einem der Ansprüche 2, 3 oder 4, wobei der Sockel (10) einen festen Betonkern aufweist, der wenigstens so hoch wie die Rippen (16) ist.

7. Fundament für eine Turmstruktur gemäß einem der Ansprüche 2, 3 oder 4, wobei die Platte (20) Umfangsträger (190) aufweist.

8. Fundament für eine Turmstruktur gemäß Anspruch 7, wobei die Umfangsträger vorgefertigt sind.

9. Fundament für eine Turmstruktur gemäß Anspruch 2, wobei Verbindungen verwendet werden, um die Platten verstärkenden Bewehrungsstäbe (22, 24) mit den horizontalen Stiften (40, 42) auf den Rippen (16) zu verbinden oder sich die Bewährungsstäbe (22, 24) für die strukturelle Kontinuität der Platte (20) durchgehend unterhalb der Rippen (16) erstrecken.

10. Fundament für eine Turmstruktur gemäß einem der Ansprüche 2, 3 oder 4, wobei der vor Ort betonierte Sockel (10) und die vor Ort betonierte Platte (20) Bewehrungsstäbe aufweisen, die diese integral für die strukturelle Integrität miteinander verbinden.

11. Verfahren zur Konstruktion eines Fundaments für eine Turmstruktur mit einem zentralen Sockel einer Rippe auf einer Plattenart, wobei das Verfahren folgendes umfasst:
Bereitstellen einer Vielzahl von Rippen (16) mit Vorspannelementen oder Kanälen für die Vorspannelemente darin oder Rippenformen (16f) mit zusammengebauten Verstärkungs- und Vorspannelement-Kanälen darin für die Vorspannelemente (58, 110) an der Stelle, an der das Fundament konstruiert werden soll, und Anordnen dieser Rippen (16) oder der Rippenformen (16b) derart, dass die inneren Enden der Rippen an den Ort angrenzen, an dem der Sockel (10) ausgebildet werden soll,
Bereitstellen einer Sockelform (102) und eines den Sockel verstärkenden Korbes (60) mit einer Ankerbolzenanordnung (50) in der Sockelform,
Bereitstellen von Vorspannelementen (58, 110, 111) oder Kanälen für Vorspannelemente an gewünschten Positionen, an denen der Sockel (10) ausgebildet werden soll,
Bereitstellen von Plattenformen (17) für den Plattenumfang und Bereitstellen von Verstärkungselementen (22, 24) innerhalb der Plattenformen,
Bereitstellen von horizontalen (111) und Umfangs- (112) Vorspannelementen oder Kanälen für Vorspannelemente in den Plattenformen,
Gießen von Beton an der Stelle in die Formen, um die Rippen (16) sowohl mit der Platte (20) als auch mit dem Sockel (10) integral nach den gegossenen Betongruppen zu verbinden,
Vorspannen des Fundaments entlang der Rippen und durch den Sockel und horizontal durch die Platte und entlang des Umfangs mit den Vorspannelementen (58, 110, 111, 112),
Anbringen der Turmbasis auf dem Fundament und Vorspannen des Fundaments vertikal unter Verwenden der Bolzenanordnung (60).

12. Verfahren zur Konstruktion eines Fundaments gemäß Anspruch 11, wobei ferner eine Baugrube (13) bereitgestellt wird, um das Fundament (100) darin zu konstruieren und Auffüllen des Fundaments mit Verfüllmaterial.

13. Verfahren zur Konstruktion eines Fundaments gemäß Anspruch 11, wobei ein Schritt des Konstruierens des Fundaments auf einem Leichter oder in einem Trockendock eingeschlossen ist, Transportieren oder Schwimmen lassen des Fundaments zu einem Aufstellungsort, Absenken des Fundaments in einen vorbereiteten Ort des Meeresbodens und Auffüllen des Fundaments mit Verfüllmaterial für zusätzliche Stabilität.

14. Verfahren zur Konstruktion eines Fundaments gemäß Anspruch 11 mit dem zusätzlichen Schritt des Befestigens der Rippen (16) oder der Platte (20) an Pfeilern, Landungsbrücken oder Ankern, die sich in den Boden unter dem Fundament erstrecken, um das Fundament zu stabilisieren.

15. Verfahren zur Konstruktion eines Fundaments gemäß Anspruch 11 mit dem zusätzlichen Schritt des Bereitstellens eines in das Fundament integrierten Umfangsträgers.

## Revendications

1. Fondation pour une structure de tour comportant un socle central du type à renfort sur dalle la fondation comprenant :
un renfort préfabriqué ou coulé sur place (16) avec une base horizontale présentant deux côtés et un moyen (36, 38, 40, 42), le long des deux côtés de la base horizontale (21), ou un moyen (42b), sous la base (21), à relier et à fixer structurellement à une dalle coulée sur place (20), étant précisé que ce moyen assure une continuité structurelle de la dalle (20) d'un bout à l'autre ou au-dessous du renfort (16), et que le renfort (16) a une extrémité verticale proximale sur laquelle est prévu un moyen (34, 34a, 46) à relier et à fixer structurellement à un socle coulé sur place (10), étant précisé que ce moyen assure une continuité structurelle du socle (10) avec le renfort (16), et des éléments de post-tension (58) qui traversent les renforts (16) et le socle (10) pour relier les renforts (16) au socle (10) avec une contrainte de post-compression.

2. Fondation pour une structure de tour selon la revendication 1, comportant :
une dalle en béton coulée sur place (20), continue structurellement, avec un élément de post-tension périphérique (112) et plusieurs éléments de post-tension horizontaux (111) dans la dalle (20), pour former une dalle en béton (20) précontrainte horizontalement, et renfermant au moins deux couches de treillis horizontaux de barres d'armature (22, 24),
un socle en béton coulé sur place (10) avec une cage de socle encastrée (50) présentant plusieurs boulons d'ancrage (56) qui s'étendent à la verticale à partir d'un anneau à encastrer (54), près du bas du socle (10), jusqu'au haut du socle (10) pour assujettir la base d'une tour et fournir une contrainte de post-compression sur le socle, et présentant une barre d'armature verticale ou en forme de Z (55) et une barre d'armature circonférentielle (59) pour renforcer le socle,
étant précisé que le socle en béton coulé sur place (10) et la dalle en béton coulée sur place (20) sont reliés d'une seule pièce, et
plusieurs renforts (16) qui s'étendent vers l'extérieur à partir du socle (10), au-dessus de la dalle (20).

3. Fondation pour une structure de tour selon la revendication 2, comportant plusieurs éléments de post-tension horizontaux (110) qui traversent la longueur des renforts (16) soit par la base des renforts (16), soit sous les renforts (16), pour précontraindre horizontalement la fondation.

4. Fondation pour une structure de tour selon la revendication 2 ou la revendication 3, dont les renforts (16) sont disposés par paires sur les côtés opposés du socle (10) et qui comporte des éléments de post-tension (58, 110) qui s'étendent à partir des extrémités distales des renforts (16), à travers le socle (10), pour relier des paires de renforts (16) au socle (10) moyennant une contrainte de post-compression multiaxiale.

5. Fondation pour une structure de tour selon l'une quelconque des revendications 1 à 4, étant précisé que les renforts (16) ont un poteau (16p) pour supporter une tour.

6. Fondation pour une structure de tour selon l'une quelconque des revendications 2, 3 ou 4, étant précisé que le socle (10) a un coeur en béton plein qui est au moins aussi haut que les renforts (16).

7. Fondation pour une structure de tour selon l'une quelconque des revendications 2, 3 ou 4, étant précisé que la dalle (20) a des poutrelles périphériques (190).

8. Fondation pour une structure de tour selon la revendication 7, étant précisé que les poutrelles périphériques sont préfabriquées.

9. Fondation pour une structure de tour selon la revendication 2, étant précisé que des éclisses sont utilisées pour relier la barre d'armature de renforcement de dalle (22, 24) à des goujons horizontaux (40, 42) sur les renforts (16), ou la barre d'armature (22, 24) s'étend de manière continue sous les renforts (16), pour une continuité structurelle de la dalle (20).

10. Fondation pour une structure de tour selon l'une quelconque des revendications 2, 3 ou 4, étant précisé que la barre d'armature relie d'une seule pièce le socle coulé sur place (10) et la dalle coulée sur place (20), pour une unité structurelle.

11. Procédé pour construire une fondation pour une structure de tour comportant un socle central du type à renfort sur dalle, le procédé comprenant les étapes qui consistent:
à doter plusieurs renforts (16) d'éléments de post-tension ou de conduits pour des éléments de post-tension ou de formes de renforts (16f) renfermant des conduits d'éléments de renforcement et de post-tension assemblés, pour des éléments de post-tension (58, 110), à l'endroit où la fondation doit être construite, et à disposer ces renforts (16) ou formes de renforts (16b) avec leurs extrémités intérieures voisines d'un endroit où un socle (10) doit être formé,
à doter une forme de socle (102) et une cage de renforcement de socle (60) d'un assemblage de boulons d'ancrage (50) à l'intérieur de la forme de socle,
à prévoir des éléments de post-tension (58, 110, 111) ou des conduits pour éléments de post-tension à des endroits souhaités à l'intérieur desquels le socle (10) doit être formé,
à prévoir des formes de dalle (17) pour un périmètre de dalle et à prévoir des éléments de renforcement (22, 24) à l'intérieur des formes de dalle,
à prévoir des éléments de post-tension horizontaux (111) et périphériques (112) ou des conduits pour éléments de post-tension à l'intérieur des formes de dalle,
à verser du béton, sur place, dans lesdites formes afin de relier d'une seule pièce les renforts (16) à la fois à la dalle (20) et au socle (10) une fois que le béton versé prend,
à précontraindre la fondation le long des renforts et à travers le socle, et horizontalement à travers la dalle et le long du périmètre avec des éléments de post-tension (58, 110, 111, 112),
à fixer une base de tour en haut de la fondation et à précontraindre la fondation verticalement en utilisant l'assemblage de boulons (60).

12. Procédé pour construire une fondation selon la revendication 11, prévoyant par ailleurs une cuvette d'excavation (13) pour y construire la fondation (100), et le remplissage de la fondation avec un matériau de remplissage.

13. Procédé pour construire une fondation selon la revendication 11, comprenant l'étape qui consiste à construire la fondation sur une barge ou dans une cale sèche, à transporter ou à faire flotter la fondation jusqu'à un site d'installation, à faire descendre la fondation dans un endroit préparé de fonds marins et à remplir la fondation avec le matériau de remplissage, pour une stabilité supplémentaire.

14. Procédé pour construire une fondation selon la revendication 11, avec l'étape supplémentaire qui consiste à relier les renforts (16) ou la dalle (20) à des piles, à des poteaux ou à des ancrages dans le sol sous la fondation, afin de stabiliser la fondation.

15. Procédé pour construire une fondation selon la revendication 11, avec l'étape supplémentaire qui consiste à prévoir une poutrelle périphérique d'une seule pièce avec la fondation.
